# EUROPÄISCHE PATENTSCHRIFT

(11) **EP 0 895 585 B1**
(45) Veröffentlichungstag und Bekanntmachung des Hinweises auf die Patenterteilung: **26.09.2001**
(21) Anmeldenummer: 97920724.8
(22) Anmeldetag: 19.04.1997
(51) Int. Cl.: G01M 13/02

(54) **VERSPANNUNGSPRÜFSTAND FÜR HUBSCHRAUBERGETRIEBE**
STRESS TEST RIG FOR HELICOPTER GEAR UNITS
BANC D'ESSAI DE CONTRAINTE POUR UN ENGRENAGE D'HELICOPTERE

(30) Priorität: 26.04.1996 DE 19616729
(43) Veröffentlichungstag der Anmeldung: 10.02.1999
(73) Patentinhaber: ZF Luftfahrttechnik GmbH, 34379 Calden (DE)
(72) Erfinder: KRUG, Herbert, D-34369 Hofgeismar (DE); BRÜGGEMANN, Detlef, D-34292 Ahnatal (DE); SCHRÖDER, Günter, D-34266 Niestetal (DE)
(74) Vertreter: Zietlow, Karl-Peter
(86) Internationale Anmeldenummer: EP9701987
(87) Internationale Veröffentlichungsnummer: WO9741415

(56) Entgegenhaltungen:
- DE-A- 2 948 517
- DE-A- 3 311 618
- DE-A- 3 410 702
- DE-A- 4 325 403
- DE-U- 7 812 143
- US-A- 2 981 103
- US-A- 4 159 642
- US-A- 5 307 676
- PATENT ABSTRACTS OF JAPAN vol. 096, no. 004, 30.April 1996 & JP 07 325017 A (TOYO ELECTRIC MFG CO LTD), 12.Dezember 1995,

## Beschreibung

Die Erfindung betrifft einen Verspannungsprüfstand für Hubschraubergetriebe.

Das Kernstück eines Hubschraubers ist sein Hauptrotor. Er sorgt mit seinen zwei und mehr Rotorblättern, die an einem Rotorkopf angelenkt und um ihre Längsachse schwenkbar gelagert sind, nicht nur für den Auftrieb, sondern auch für den Vortrieb.

Ein oder mehrere Gasturbinen treiben den Hauptrotor über ein Getriebe und einen Hauptrotormast an, der im Getriebe drehbar gelagert ist und an dem der Rotorkopf befestigt ist.

Häufig hat der Hubschrauber noch einen angetriebenen Heckrotor, so daß das Getriebe mehrere Leistungseingänge für die Gasturbinen und mehrere Abtriebe für die Rotoren hat.

Für Hubschrauber gelten hohe Sicherheitsstandards. Daher müssen die Bauteile und Aggregate in der Entwicklung und Erprobung langen Tests unterzogen werden. Bei einer Antriebsleistung von über 1 000 kW für den Hauptrotor und Drehzahlen von ca. 20 000 U/min an den Leistungseingängen des Getriebes bedeutet das eine hohe installierte Prüfstandsleistung.

Um leistungsübertragende Bauteile und Aggregate zu prüfen, z. B. Getriebe, Kupplungen, Wellen usw., sind zwei Arten von Prüfständen bekannt ("antriebstechnik" 11, 1972, Nr. 9, Seiten 332 - 336; "VDI-Z" 115, 1973, Nr. 2, Seiten 115 - 121; "antriebstechnik" 22, 1983,. Nr. 10, Seiten 32, 34, 36 und 38), und zwar sogenannte Bremsprüfstände, bei denen die Antriebsleistung von einer Antriebsmaschine über einen Prüfling zu einer Bremseinrichtung durchläuft, oder sogenannte Verspannungsprüfstände, bei denen die Prüfleistung in einem Verspannungskreis, in dem der Prüfling eingeschlossen ist, umläuft und nur die dabei entstehenden Leistungsverluste von einer Antriebsmaschine gedeckt werden. Der Prüfling wird im zweiten Fall durch ein Moment belastet, das sich aus dem Verspannungsmoment und den von der Antriebsmaschine aufzubringenden Momenten zusammensetzt, die aus der Verlustleistung und den Massenträgheitsmomenten resultieren.

Wegen ihres geringen Energiebedarfs eignen sich Verspannungsprüfstände besonders für Getriebe mit einer großen übertragbaren Leistung, z. B. in der Fahrzeug- und Luftfahrttechnik.

Das Verspannungsmoment kann über eine Verspannvorrichtung fest vorgegeben werden. Es ist aber auch bekannt(DE-CE 43 25 403), das Verspannungsmoment während des Tests zu verändern, zu steuern oder zu regeln. Hierzu dient eine mikroprozessorgesteuerte, elektrische Regeleinheit, z. B. ein Motor oder Generator, die über ein hochübersetzendes Überlagerungsgetriebe, z. B. in Form eines Spannungswellengetriebes, in den Verspannungskreis eingreift und einen Verdrehwinkel zwischen dem Eintrieb und Abtrieb erzeugt. Gleichzeitig läßt sich die Drehzahl am Getriebeeingang bzw. Getriebeausgang dem Übersetzungsverhältnis des Prüflings anpassen, ohne die Prüfstandsgetriebe zu verändern, indem die Regeleinheit am Überlagerungsgetriebe eine entsprechende Schlupfdrehzahl vorgibt. So können auf dem gleichen Prüfstand Getriebe mit unterschiedlichen Drehzahl- und Momentanforderungen geprüft werden, sofern die Eingangs- und Ausgangswellen der Getriebe gleich angeordnet sind. Ist das nicht der Fall, müssen die Prüfstände den räumlichen Verhältnissen der Prüflinge angepaßt werden. Das bedeutet einen hohen Aufwand, wenn Prüfstandsgetriebe und Überlagerungsgetriebe ausgetauscht werden müssen.

Die umfangreichen Montagearbeiten zur Anpassung des Prüfstands an einen neuen Getriebetyp bedingen ferner eine lange Stillstandszeit, in der die kostspielige Investition nicht genutzt werden kann. Außerdem verlängern die Stillstandzeiten z. B. die Entwicklungszeit der zu prüfenden Getriebe.

Wie oben erwähnt, unterscheiden sich die Hubschraubergetriebe durch die Anzahl und Lage der Eingangswellen und Ausgangswellen. Ferner differieren die zu übertragenden Leistungen, Drehmomente, Drehzahlen und z. T. Drehrichtungen. Bei dem erfindungsgemäßen Verspannungsprüfstand bleibt ein großer Teil des Prüfstands für alle Getriebetypen einer Leistungsklasse gleich, während die Unterschiede der Getriebetypen durch Adaptionseinrichtungen ausgeglichen werden.

Die Prüfgetriebe werden zusammen mit den Adaptionseinrichtungen auf einem Montagewagen vormontiert und beim Prüfgetriebewechsel mit dem Montagewagen in den festmontierten Teil des Prüfstands gefahren und dort angeschlossen. Dadurch spart man neben Investitionskosten für zahlreiche verschiedene Prüfstände Montagekosten durch kürzere Rüstzeiten. Gleichzeitig können die hochwertigen Prüfstände besser ausgelastet werden, da während des Tests des einen Getriebes bereits ein anderes vormontiert werden kann.

Das Deutsche Gebrauchsmuster DE-U-78 12 143 beschreibt einen Verspannungsprüfstand für Hubschraubergetriebe, bei dem zwei Prüfstandgetriebe, ein Motor, ein Überlagerungsgetriebe, Wellen und das Prüfgetriebe einen Verspannkreis bilden. Die gemeinsam für alle Prüfgetriebe verwendeten Einrichtungen sind fest montiert, und das Prüfgetriebe und die dazu erforderlichen Adaptionseinrichtungen werden auf einem Montagewagen montiert.

Der Erfindung liegt die Aufgabe zugrunde, die Verspannungsprüfstände, insbesondere für die Prüfung von Hubschraubergetrieben, besser auszulasten.

Sie wird gemäß der Erfindung durch die Merkmale des Patentanspruchs 1 gelöst.

Da die Prüfgetriebetypen sich auch in den Achsenabständen und den Winkeln unterscheiden, die die Eingangswellen untereinander und mit den Ausgangswellen einschließen, muß die Lage der Prüfstandsgetriebe entsprechend angepaßt werden. Nach der Ausgestaltung gemäß dem kannzeichmenden Teil des Patentanspruchs 1 kann durch das Prüfstandsgetriebe in Form eines Kegelradgetriebes und die Kegelradstufe am Überlagerungsgetriebe die Abtriebswelle des Überlagerungsgetriebes um die Ausgangswelle des

Prüfstandsgetriebes geschwenkt werden und somit auf die Höhe der Eingangswelle des Prüfgetriebes oder eines Adaptionsgetriebes eingestellt werden, ohne daß die Lage des festinstallierten Prüfstandsgetriebes verändert wird.

Bei dem erfindungsgemäßen Verspannungsprüfstand wird ein sogenanntes Endlos-Verspannsystem verwendet. Da in einem Verspannungskreis die Prüfleistung zurückgewonnen wird, braucht die Antriebsmaschine, ein elektrischer Motor, nur die Verlustleistung aufzubringen und dafür ausgelegt zu werden. Dies spart Energie und Investitionskosten. Durch die elektrische Regeleinheit kann ein gewünschtes Drehmoment vorgegeben, eingehalten oder während des Prüflaufs verändert werden. Ferner kann die Eingangsdrehzahl am Prüfgetriebe eingestellt werden, indem die Regeleinheit eine entsprechende Schlupfdrehzahl am Überlagerungsgetriebe vorgibt.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

Weitere Einzelheiten der Erfindung werden nachfolgend in Verbindung mit den beiliegenden Zeichnungen anhand von Ausführungsbeispielen näher erläutert. Es zeigen:

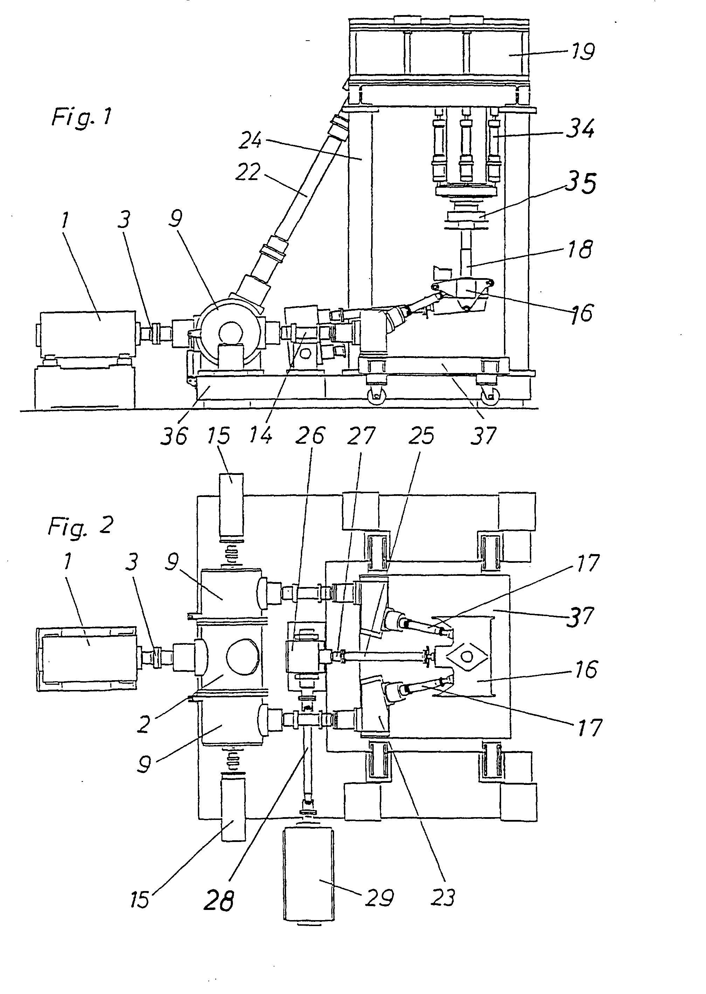

- Fig. 1: einen Aufriß eines Verspannungsprüfstands;
- Fig. 2: einen Grundriß des Verspannungsprüfstands nach Fig. 1;

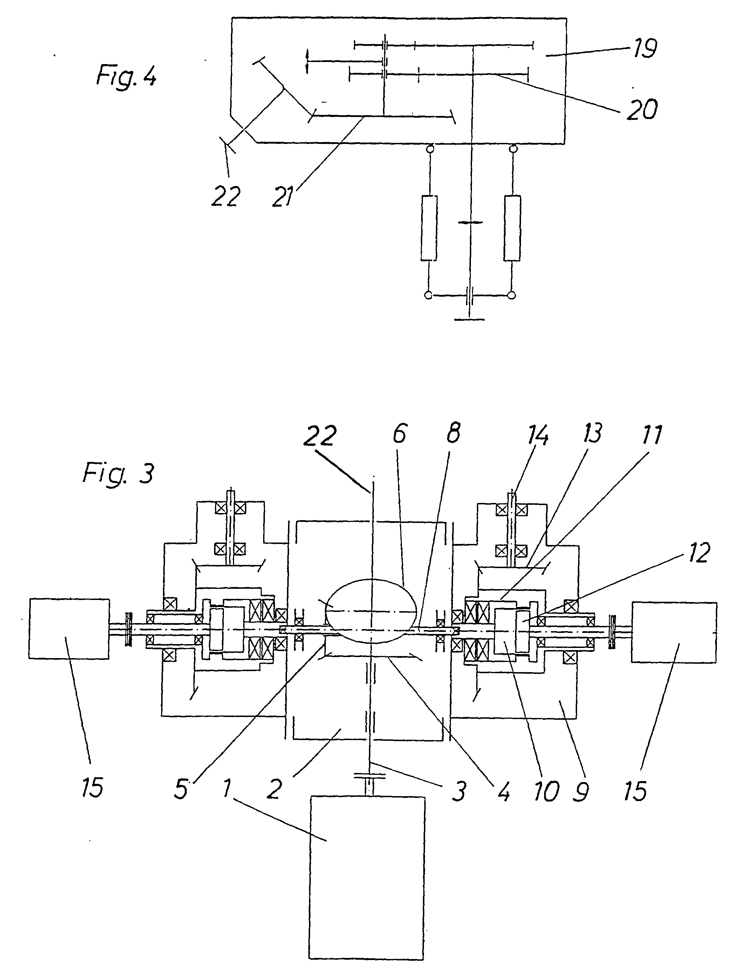

- Fig. 3: einen prinzipiellen Aufbau eines Prüfstandsge triebes und eines Überlagerungsgetriebes;
- Fig. 4: einen schematischen Aufbau eines zweiten Prüfstandsgetriebes und

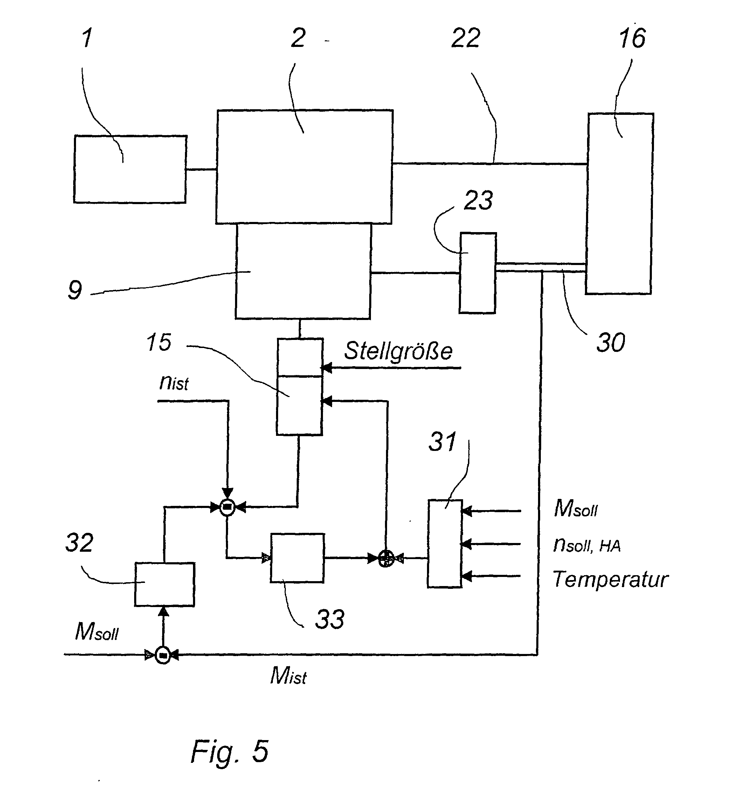

- Fig. 5: ein Prinzipschaltbild für eine Prüfdreh-Momentenregelung.

Ein Motor 1, der auf einem Fundament gelagert ist, treibt über eine Eingangswelle 3 ein erstes Prüfstandsgetriebe 2 an. Dieses ist ein Kegelradgetriebe mit einem Kegelrad 4, das auf der Eingangswelle 3 befestigt ist und mit einem weiteren Kegelrad 5 kämmt, das auf einer Ausgangswelle 8 sitzt.

Beiderseits des Prüfstandsgetriebes 2 ist jeweils ein Überlagerungsgetriebe 9 angeordnet. Grundsätzlich können alle Arten von Überlagerungsgetrieben verwendet werden, jedoch sind die hier dargestellten Spannungswellengetriebe wegen ihrer hohen Übersetzung und ihrer geringen Massenträgheit für diesen Zweck besonders gut geeignet.

Das Überlagerungsgetriebe besteht im wesentlichen aus einer Hohlwelle 10, die mit der Ausgangswelle 8 verbunden ist und eine Außenverzahnung trägt. Die Hohlwelle 10 ist elastisch verformbar. Dadurch kann eine in ihr umlaufende Nockenwelle 12 die Außenverzahnung der Hohlwelle 10 in Eingriff mit einer Innenverzahnung eines Hohlrads 11 bringen. Die Nockenwelle 12 wird von einer Regeleinheit 15 angetrieben, die einen elektrischen Servomotor enthält.

Das Hohlrad 11 ist mit einem Kegelrad einer Kegelradstufe 13 verbunden, dessen anderes Kegelrad auf einer Abtriebswelle 14 sitzt. Diese ist um die Achse der Ausgangswelle 8 des Prüfstandsgetriebes 2 schwenkbar, und zwar entweder zusammen mit dem Überlagerungsgetriebe 9, das zu diesem Zweck kurz vom Prüfstandsgetriebe 2 gelöst wird, oder allein, indem sie durch ein Fenster im Gehäuse des Überlagerungsgetriebes 9 durchgreift und zusammen mit einem Lagergehäuse auf dem Gehäuse des Überlagerungsgetriebes 9 geschwenkt wird. Somit kann der Wellenanschluß der Abtriebswelle 14 auf den Wellenanschluß einer Eingangswelle eines Adaptionsgetriebe 23 oder eines Prüfgetriebes 16 in der Höhe eingestellt werden, ohne die Lage der Prüfstandsgetriebe verändern zu müssen.

Das Prüfgetriebe 16 ist zusammen mit den Adaptionsgetrieben 23 auf einem Montagewagen 37 montiert und wird mit standardisierten Verbindungseinrichtungen an den festmontierten Teil des Verspannungsprüfstands angeschlossen, und zwar sowohl in bezug auf die leistungsübertragenden Bauteile als auch auf die Versorgungs- und Meßleitungen. Die Adaptionsgetriebe 23 übernehmen Anpassungen an den jeweiligen Typ des Prüfgetriebes 16, die durch den festmontierten Teil des Verspannungsprüfstands nicht erreicht werden können.

Ein zweites Prüfstandsgetriebe 19 befindet sich oberhalb des Prüfgetriebes 16 in einem Prüfstandsrahmen 24. Es hat ein zweistufiges Schaltgetriebe 20 in Vorgelegebauweise und eine nachgeschaltete Kegelradstufe 21, die über eine Verbindungswelle 22 mit einem Kegelrad 6 des Prüfstandsgetriebes 2 verbunden ist. Somit wird der Verspannungskreis durch eine Hauptausgangswelle 18 des Prüfgetriebes 16 geschlossen, die das Prüfgetriebe 16 mit dem zweiten Prüfstandsgetriebe 19 triebmäßig verbindet.

Die Hauptausgangswelle 18 entspricht einem Hauptrotormast eines Hubschraubers. Durch die schaltbaren Stufen des zweiten Prüfstandsgetriebes 19 kann ein großer Drehzahlbereich für verschiedene Rotorkonfigurationen abgedeckt werden.

Auf die Hauptausgangswelle 18 können über einen Adapter 35 durch Stellglieder 34 eines Simulators Kräfte und Momente aufgebracht werden, wie sie bei einer Flugsteuerung eines Hubschraubers in der Praxis auftreten.

Abgesehen vom Motor 1, der auf einem eigenen Fundament befestigt ist, sind die festmontierten Teile des Verspannungsprüfstands, das Prüfstandsgetriebe 2, das Überlagerungsgetriebe 9, der Prüfstandsrahmen 24 mit dem zweiten Prüfstandsgetriebe 19 usw., auf einer Grundplatte 36 angebracht, die schwingungsdämpfend gelagert ist. Dadurch werden Schwingungsübertragungen auf die Umgebung des Verspannungsprüfstands weitgehend vermieden.

Das Prüfgetriebe 16 besitzt eine zweite Abtriebswelle 25, die einer Heckrotorwelle eines Hubschraubers entspricht. Diese ist mit einer Eingangswelle 27 eines Kegelradgetriebes 26 gekuppelt. Die Eingangswelle 27 ist wie die Abtriebswelle 14 des Überlagerungsgetriebes 9 schwenkbar gelagert, und zwar um eine Ausgangswelle 28 des Kegelradgetriebes 26.
Das Schwenken des Getriebes 26 um die Achse 28 hat den Grund, daß bei verschiedenen Neigungswinkeln der Welle 25 (= Lage der Heckrotorabtriebswelle) der Bremsgenerator 29 nicht in seiner Einbaulage angepaßt werden muß.

Die zweite Abtriebswelle 25 ist nicht in den Verspannungskreis einbezogen, sondern wird von einem Bremsgenerator 29 beaufschlagt, der die Bremsleistung zweckmäßigerweise ins Versorgungsnetz zurückspeist. Da der Heckrotor im Verhältnis zum Hauptrotor nur eine geringe Leistung aufnimmt, ist diese Lösung im Hinblick auf die Investitions-und Energiekosten sowie der Anpassungsfähigkeit zweckmäßig.

Die Regeleinheit 15 bringt über ihren Servomotor und das Überlagerungsgetriebe 9 das Verspannungsmoment auf, wobei der Strom des Servomotors als Stellgröße dient. Sie wird in Abhängigkeit der Istdrehzahl und eines Sollwert-/ Istwertvergleichs des Drehmoments der Eingangswelle 17 des Prüfgetriebes 16 über einen proportional wirkenden Regler 32 und einen proportional integral wirkenden Regler 33 geregelt. Das Istdrehmoment wird von einer Drehmoment-Meßwelle 30 erfaßt und ein entsprechendes Signal an den proportional wirkenden Regler 32 weitergeleitet.

Die Regelung wird von einer Steuerung durch ein neuronales Netz 31 überlagert, das die Stellgröße für die Regeleinheit 15, insbesondere den Strom des elektrischen Servomotors, zu mehr als 80 % in Abhängigkeit von Eingangsgrößen vorgibt. Als Eingangsgrößen kommen das Solldrehmoment M_soll die Solldrehzahl der Eingangswelle 17 n_soll HA und die Öltemperatur des Überlagerungsgetriebes 9 in Frage. Dabei können die Eingangsgrößen einzeln oder zu mehreren gemeinsam ausgewertet werden. Nähere Einzelheiten über neuronale Netze sind dem Fachmann bekannt, z. B. aus "Kleines Handbuch Neuronale Netze" Vieweg Verlag, Braunschweig, 1993. Durch eine solche kombinierte Steuerung und Regelung läßt sich ein sehr gleichmäßiges, drehschwingungsfreies Verspannungsdrehmoment erzeugen oder gezielt Drehmoment-Belastungsprofile vorgeben.

### Bezugszeichen

- 1: Motor
- 2: Prüfstandsgetriebe
- 3: Eingangswelle
- 4: Kegelrad
- 5: Kegelrad
- 6: Kegelrad
- 8: Ausgangswelle
- 9: Überlagerungsgetriebe
- 10: Hohlwelle
- 11: Hohlrad
- 12: Nockenwelle
- 13: Kegelradstufe
- 14: Abtriebswelle
- 15: Regeleinheit
- 16: Prüfgetriebe
- 17: Eingangswelle
- 18: Hauptausgangswelle
- 19: zweites Prüfstandsgetriebe
- 20: zweistufiges Schaltgetriebe
- 21: Kegelradstufe
- 22: Verbindungswelle
- 23: Adaptionsgetriebe
- 24: Prüfstandsrahmen
- 25: zweite Abtriebswelle
- 26: Kegelradgetriebe
- 27: Eingangswelle
- 28: Ausgangswelle
- 29: Bremsgenerator
- 30: Drehmoment-Meßwelle
- 31: neuronales Netz
- 32: proportional wirkender Regler
- 33: proportional integral wirkender Regler
- 34: Stellglieder
- 35: Adapter
- 36: Grundplatte
- 37: Montagewagen

## Patentansprüche

1. Verspannungsprüfstand für Hubschraubergetriebe mit einem ersten Prüfstandsgetriebe (2), das von einem Motor (1) angetrieben wird und über Wellen, einem Überlagerungsgetriebe (9), einem zweiten Prüfstandsgetriebe (19) und einem Prüfgetriebe (16) einen Verspannungskreis bildet, wobei der Verspannungsprüfstand aus einem festmontierten Teil, der alle für die Prüfgetriebetypen gemeinsam verwendeten Einrichtungen aufnimmt, und einem Montagewagen (37) besteht, der zeitweise mit dem festmontierten Teil verbunden ist und das Prüfgetriebe (16) und alle für dieses erforderlichen Adaptionseinrichtungen aufnimmt, **dadurch gekennzeichnet, daß** das erste Prüfstandsgetriebe (2) ein Kegelradgetriebe ist, mit dessen Eingangswelle (3) der Motor (1) verbunden ist und an dessen winklig zur Eingangswelle (3) liegender Ausgangswelle (8) das Überlagerungsgetriebe (9) mit einer mikroprozessorgesteuerten elektrischen Regeleinheit (15) angeschlossen ist, wobei das Überlagerungsgetriebe (9) über eine Kegelradstufe (13) und eine Abtriebswelle (14), die um die Achse der Ausgangswelle (8) schwenkbar ist, an einer Eingangswelle (17) des Prüfgetriebes (16) angeschlossen wird, und daß eine Hauptausgangswelle (18) des Prüfgetriebes (16) über das zweite Prüfstandsgetriebe (19) mit dem ersten Prüfstandsgetriebe (2) verbindbar ist.

2. Verspannungsprüfstand nach Anspruch 1, **dadurch gekennzeichnet, daß** zwischen der Ausgangswelle (14) des Überlagerungsgetriebes (9) und der Eingangswelle (17) des Prüfgetriebes (16) ein Adaptionsgetriebe (23) vorgesehen ist.

3. Verspannungsprüfstand nach Anspruch 1 oder 2, **dadurch gekennzeichnet, daß** das zweite Prüfstandsgetriebe (19) ein schaltbares, zweistufiges Stirnrad-Kegelradgetriebe ist, das in einem Prüfstandsrahmen (24) oberhalb des Prüfgetriebes (16) untergebracht ist.

4. Verspannungsprüfstand nach einem der vorangehenden Ansprüche, **dadurch gekennzeichnet, daß** das Überlagerungsgetriebe (9) ein hochübersetzendes Spannungswellengetriebe ist, im wesentlichen bestehend aus einem innenverzahnten Hohlrad (11) das mit der Kegelradstufe (13) verbunden ist, einer außenverzahnten, elastischen Hohlwelle (10), die mit der Ausgangswelle (8) des ersten Prüfstandsgetriebes (2) verbunden ist, und einer Nockenwelle (12), durch die die Hohlwelle (10) mit dem Hohlrad (11) in Eingriff gebracht wird und die mit der Regeleinheit (15) verbunden ist.

5. Verspannungsprüfstand nach einem der vorangehenden Ansprüche, **dadurch gekennzeichnet, daß** an dem ersten Prüfstandsgetriebe (2) ein zweites gleichartiges Überlagerungsgetriebe (9) angeflanscht ist, das mit einer zweiten Eingangswelle (17) des Prüfgetriebes (16) trieblich verbindbar ist.

6. Verspannungsprüfstand nach einem der vorangehenden Ansprüche, **dadurch gekennzeichnet, daß** eine zweite Abtriebswelle (25) des Prüfgetriebes (16) über ein Kegelradgetriebe (26), dessen Eingangswelle (27) um die Achse der Ausgangswelle (28) des Kegelradgetriebes (26) schwenkbar ist, mit einem Bremsgenerator (29) verbindbar ist.

7. Verspannungsprüfstand nach einem der vorangehenden Ansprüche, **dadurch gekennzeichnet, daß** das Solldrehmoment (M_soll) mit dem Istdrehmoment (M_ist) verglichen wird und ein daraus abgeleitetes Signal der Regeleinheit (15) zugeleitet wird.

8. Verspannungsprüfstand nach Anspruch 7, **dadurch gekennzeichnet, daß** zwischen dem Prüfgetriebe (16) und dem Adaptionsgetriebe (23) eine Drehmoment-meßwelle (30) angeordnet ist.

9. Verspannungsprüfstand nach Anspruch 7 oder 8, **dadurch gekennzeichnet, daß** die Stellgröße für die Regeleinheit (15), insbesondere der Strom eines elektrischen Servomotors, zu mehr als 80 % über ein neuronales Netz (31) in Abhängigkeit von Eingangsgrößen gesteuert vorgegeben wird, die mindestens eine von folgenden Größen umfaßt: Solldrehmoment (M_soll), Solldrehzahl (n_soll HA) des Hauptantriebs und die Öltemperatur der Regeleinheit (15).

10. Verspannungsprüfstand nach Anspruch 8 oder 9, **dadurch gekennzeichnet, daß** die Solldrehmomentvorgabe dynamische Komponenten, wie periodisch wechselnde Lasten, berücksichtigt.

11. Verspannungsprüfstand nach einem der vorangehenden Ansprüche, **dadurch gekennzeichnet, daß** zwischen dem Prüfstandsrahmen (24) und der Hauptausgangswelle (18) ein Simulator mit Stellgliedern (34) zur Simulation der Kräfte und Momente, die bei einer Flugsteuerung eines Hubschraubers auftreten, angebracht ist.

12. Verspannungsprüfstand nach Anspruch 11, **dadurch gekennzeichnet, daß** der Simulator über einen Adapter (35) an der Hauptausgangswelle (18) des Prüfgetriebes (16) angeschlossen ist.

13. Verspannungsprüfstand nach einem der vorangehenden Ansprüche, **dadurch gekennzeichnet, daß** der festmontierte Teil des Verspannungsprüfstandes auf mindestens einer Grundplatte (36) montiert ist, die schwingungsdämpfend gelagert ist.

## Claims

1. Closed-loop test rig for helicopter gear units with a first test rig gear unit (2), which is driven by a motor (1) and forms a pre-load circuit via shafts, a superimposed gear unit (9), a second test rig gear unit (19) and the test gear (16), with the closed-loop test rig consisting of a rigidly mounted part, which supports all devices jointly used for the test gear types, and an assembly truck (37), which is temporarily connected to the rigidly mounted part and holds the test gear (16) and all the adapter devices required for it, **characterized in that** the first test rig gear unit (2) is a bevel gear unit, whose input shaft (3) is connected to the motor (1) and whose output shaft (8), which forms an angle in relation to the input shaft (3), is connected to the superimposed gear unit (9) with a microprocessor-controlled electrical control unit (15), with the superimposed gear unit (9) being connected to an input shaft (17) of the test gear (16) via a bevel gear step (13) and an output shaft (14), which swivels around the axis of the output shaft (8); and in that a main output shaft (18) of the test gear (16) can be connected to the first test rig gear unit (2) via the second test rig gear unit (19).

2. Closed-loop test rig according to claim 1, **characterized in that** an adaptation gear unit (23) is disposed between the output shaft (14) of the superimposed gear unit (9) and the input shaft (17) of the test gear (16).

3. Closed-loop test rig according to claim 1 or 2, **characterized in that** the second test rig gear unit (19) is a shiftable, two-stage cylindrical bevel gear, which is disposed in a test rig frame (24) above the test gear (16).

4. Closed-loop test rig according to any one of the preceding claims, **characterized in that** the superimposed gear unit (9) is a high-ratio pre-loaded shaft drive, essentially consisting of an internally teethed ring gear (11) connected to a bevel gear step (13), and an externally teethed, elastic hollow shaft (10), which is connected to the output shaft (8) of the first test rig gear unit (2), and a camshaft (12), by means of which the hollow shaft (10) is made to engage with the ring gear (11) and which is connected to the control unit (15).

5. Closed-loop test rig according to any one of the preceding claims, **characterized in that** the first test rig gear unit (2) has a second, similar superimposed gear unit (9) flanged to it, which can form a drive connection with a second input shaft (17) of the test gear (16).

6. Closed-loop test rig according to any one of the preceding claims, **characterized in that** a second output shaft (25) of the test gear (16) can be connected to a brake generator (29) via a bevel gear set (26), whose input shaft (27) can swivel around the axis of the output shaft (28) of the bevel gear set (26).

7. Closed-loop test rig according to any one of the preceding claims, **characterized in that** the nominal torque is compared with the actual torque and a signal derived from this comparison is fed to the control unit (15).

8. Closed-loop test rig according to claim 7, **characterized in that** a torque-measuring shaft (30) is disposed between the test gear (16) and the adaptation gear unit (23).

9. Closed-loop test rig according to claim 7 or 8, **characterized in that** the control value for the control unit (15), in particular the power of an electric servomotor, is preset at a rate of more than 80% by a neuronal network (31) in relation to input values comprising at least one of the following values: nominal torque, nominal speed of the main drive, and the oil temperature of the control unit (15).

10. Closed-loop test rig according to claim 8 or 9, **characterized in that** the preset nominal torque considers dynamic components, such as periodically alternating loads.

11. Closed-loop test rig according to any one of the preceding claims, **characterized in that** a simulator with actuators (34) is disposed between the test rig frame (24) and the main output shaft (18) for the simulation of force and torque values that occur during flight control of a helicopter.

12. Closed-loop test rig according to claim 11, **characterized in that** the simulator is connected to the main output shaft (18) of the test gear (16) by means of an adapter (35).

13. Closed-loop test rig according to any one of the preceding claims, **characterized in that** the rigidly mounted part of the stress test rig is mounted to at least one base plate (36) with vibration-damping features.

## Revendications

1. Banc d'essai dynamométrique pour transmissions d'hélicoptères composé d'un premier réducteur intégré au banc d'essai (2), qui est entraîné par un moteur (1), et qui forme - au moyen d'arbres, d'une boîte de superposition (9), d'un deuxième réducteur du banc d'essai (19) et d'une boîte de vitesses d'essai (16) - un circuit dynamométrique, sachant que le banc d'essai dynamométrique est composé d'une partie fixe, comportant tous les équipements utilisés pour tous les types de boîtes de vitesses d'essai et d'un chariot (37), qui, temporairement, est connecté à la partie fixe et sur lequel sont installés la boîte de vitesses d'essai (16) et tous les équipements d'adaptation nécessaires, **caractérisé en ce que** le premier réducteur du banc d'essai (2) soit une boîte à pignons coniques, et en ce que le moteur (1) soit connecté à l'arbre d'entrée (3) de cette boîte, et en ce que la boîte de superposition (9), dotée d'une unité de réglage électrique commandée par microprocesseur (15), soit connectée à l'arbre de sortie (8) positionné de façon angulaire par rapport à l'arbre d'entrée (3), sachant que la boîte de superposition (9) soit connectée, par l'intermédiaire d'un étage d'engrenages coniques (13) et d'un arbre de sortie (14), lequel est orientable autour de l'axe de l'arbre de sortie (8), à un arbre d'entrée (17) de la boîte d'essai (16) et en ce que un arbre de sortie principal (18) de la boîte d'essai (16) puisse être connecté, au moyen de la deuxième boîte d'essai (19) au premier réducteur du banc d'essai (2).

2. Banc d'essai dynamométrique selon la revendication 1, **caractérisé en ce que** entre l'arbre de sortie (14) de la transmission de superposition (9) et l'arbre d'entrée (17) de la boîte d'essai (16) soit prévue une boîte d'adaptation (23).

3. Banc d'essai dynamométrique selon les revendications 1 ou 2, **caractérisé en ce que** la deuxième boîte d'essai (19) soit une boîte à pignons cylindriques et coniques couplables et à deux étages, et en ce qu'elle soit logée dans un cadre du banc d'essai (24) au-dessus de la boîte d'essai (16).

4. Banc d'essai dynamométrique selon une des revendications précédentes, **caractérisé en ce que** la boîte de superposition (9) soit une transmission à arbres de contraintes à rapport de démultiplication élevé, composée essentiellement d'une couronne à denture intérieure (11), qui est connectée à l'étage à pignons coniques (13), d'un arbre creux élastique et à denture extérieure (10) qui est connecté à l'arbre de sortie (8) du premier réducteur du banc d'essai (2) et d'un arbre à cames (12), permettant de faire engrener l'arbre creux (10) avec la couronne (11), et en ce que l'arbre à cames soit connecté à l'unité de réglage (15).

5. Banc d'essai dynamométrique selon une des revendications précédentes, **caractérisé en ce que** au premier réducteur du banc d'essai (2) soit bridé une deuxième transmission de superposition de conception identique (9) laquelle puisse être connectée au moyen d'un deuxième arbre d'entrée (17) de la boîte d'essai (16) de façon à l'entraîner.

6. Banc d'essai dynamométrique selon une des revendications précédentes, **caractérisé en ce que** un deuxième arbre de sortie (25) de la boîte d'essai (16) puisse être connecté - par l'intermédiaire d'un réducteur à pignons coniques (26), dont l'arbre d'entrée (27) est orientable autour de l'axe de l'arbre de sortie (28) de la transmission à pignons coniques (26)-à un alternateur de freinage (29).

7. Banc d'essai dynamométrique selon une des revendications précédentes, **caractérisé en ce que** le couple de consigne (M_soll) soit comparé avec le couple réel (M_ ist) et que le signal qui en est déduit vienne transmis à l'unité de réglage (15).

8. Banc d'essai dynamométrique selon la revendication 7, **caractérisé en ce que** entre la boîte d'essai (16) et la boîte d'adaptation (23) soit disposé un arbre de mesure du couple (30).

9. Banc d'essai dynamométrique selon une des revendications 7 ou 8, **caractérisé en ce que** la variable réglante pour l'unité de réglage (15), plus particulièrement, plus de 80% du courant d'un servomoteur électrique, soit pilotée au moyen d'un réseau neuronal (31) et en fonction des grandeurs d'entrée, comprenant au moins une des grandeurs suivantes : le couple de consigne (M_soll), le régime de consigne (n_soll HA) de la boîte de base et la température de l'unité de réglage (15).

10. Banc d'essai dynamométrique selon une des revendications 8 ou 9, **caractérisé en ce que** les couples de consigne tiennent compte de paramètres dynamiques, comme par ex. des charges alternées périodiquement.

11. Banc d'essai dynamométrique selon une des revendications précédentes, **caractérisé en ce que** entre le cadre du banc d'essai (24) et l'arbre de sortie principal (18) soit positionné un simulateur doté d'organes de réglage (34) permettant la simulation d'efforts et de couples qui se produisent lors du pilotage d'un hélicoptère pendant le vol.

12. Banc d'essai dynamométrique selon la revendication 11, **caractérisé en ce que** le simulateur soit connecté par l'intermédiaire d'un adaptateur (35) à l'arbre de sortie principal (18) de la boîte d'essai (16).

13. Banc d'essai dynamométrique selon une des revendications précédentes, **caractérisé en ce que** la partie fixe du banc d'essai dynamométrique soit montée sur au moins un plateau de base (36) antivibratile.
